# EUROPÄISCHE PATENTANMELDUNG

(11) **EP 0 902 572 A1**
(43) Veröffentlichungstag der Anmeldung: **17.03.1999**
(21) Anmeldenummer: 98115146.7
(22) Anmeldetag: 12.08.1998
(51) Int. Cl.: H04L 12/58

(54) **Verfahren und Vorrichtung zur Signalisierung von Nachrichten**

(30) Priorität: 11.09.1997 DE 19739830
(71) Anmelder: Deutsche Telekom AG, 53113 Bonn (DE)
(72) Erfinder: Haacke, Björn, Dipl.-Ing., 28799 Bremen (DE)

(57) **Zusammenfassung**

Die Erfindung betrifft ein Verfahren und eine Vorrichtung, die einem Empfangsteilnehmer (17) über ein Kommunikationsnetz (3) die Möglichkeit zur Verfügung stellt, unabhängig von der Möglichkeit der Abfrage der Nachricht über das Kommunikationsnetz (3) der Empfangsteilnehmer (17) über das Kommunikationsnetz (3) eine Information darüber zur Verfügung gestellt bekommt, ob eine Nachricht für ihn hinterlegt ist oder nicht.

## Beschreibung

Die Erfindung betrifft ein Verfahren und eine Vorrichtung zur Signalisierung des Erhaltens einer, für einen Empfangsteilnehmer bestimmten, zwischen-gespeicherten Nachricht, wobei von einem Sendeteilnehmer über ein Kommunikationsnetz die Nachricht zu einem Speichermedium zur Zwischenspeicherung übermittelt wird und der Empfangsteilnehmer das Speichermedium zum Erhalt der Nachricht über das Kommunikationsnetz ausliest.

Stand der Technik ist, daß auf einem Speichermedium, insbesondere auf einem E-Mail-Server von einem Sendeteilnehmer abgesendete E-Mails für den Empfangsteilnehmer gespeichert werden. Meldet sich der Empfangsteilnehmer mittels einer E-Mail-Software über ein Telefonnetz in einem Mail-System an, bekommt er mitgeteilt, ob er eine oder mehrere E-Mails erhalten hat. Während eine E-Mail-Software betrieben wird, ist es je nach E-Mail-Software möglich, daß eine Signalisierung beziehungsweise eine Information visuell und/oder akustisch darauf hinweist, ob eine neu eingetroffene E-Mail vorhanden ist.

Im Zuge dieser Anmeldung wird im folgenden die E-Mail allgemein als Nachricht bezeichnet und das Telefonnetz allgemein als Kommunikationsnetz. Ebenso wird der E-Mail-Server allgemein als Speichermedium bezeichnet. Damit sind andere Nachrichtentypen, Kommunikationsnetze oder Speichermedien für das erfindungsgemäße Verfahren beziehungsweise für die erfindungsgemäße Vorrichtung denkbar. Unter dem Begriff des Empfangs- beziehungsweise Sendeteilnehmers versteht man im Zuge dieser Anmeldung eine gemeinsame Bezeichnung für ein Empfangs- beziehungsweise Sendeendgerät sowie für eine empfangende beziehungsweise sendende Person.

Das Problem nach dem heutigen Stand der Technik ist, daß die Signalisierung einer neuen Nachricht nur funktioniert, wenn der Empfangsteilnehmer im Mail-System angemeldet ist. In einem Mail-System besteht also allgemein das Problem, daß für den Empfangsteilnehmer adressierte Nachrichten zwar auf einem Speichermedium gespeichert werden, jedoch der Empfangsteilnehmer sich zuerst im Mail-System anmelden muß, um zu erfahren, ob für ihn eine oder mehrere Nachrichten vorhanden sind. Für Empfangsteilnehmer, die sich über eine Modemverbindung beim Speichermedium im Mail-System anmelden, besteht allgemein der Nachteil, daß durch die Verbindung Kosten anfallen und durch ein häufiges Anmelden im Mail-System der Vorgang unkomfortabel ist.

Die Aufgabe besteht deshalb darin, ein Verfahren und eine Vorrichtung zu finden, welche über den Eingang einer neuen Nachricht den Empfangsteilnehmer informiert, ohne daß dieser sich über das Kommunikationsnetz in das Mail-System anmelden muß.

Diese Aufgabe wird durch ein Verfahren mit den Merkmalen des Anspruchs 1 und durch eine Vorrichtung mit den Merkmalen des Anspruchs 12 gelöst. Es ist vorgesehen, daß unabhängig von der Möglichkeit der Abfrage der Nachricht über das Kommunikationsnetz der Empfangsteilnehmer über das Kommunikationsnetz eine Information darüber zur Verfügung gestellt bekommt, ob eine Nachricht für ihn hinterlegt ist oder nicht. Damit ist vorgesehen, daß das Speichermedium die Information an den Empfangsteilnehmer weiterreicht, wobei das Kommunikationsnetz nur zur Übertragung und Vermittlung dieser Information dient.

Nach Anspruch 2 wird als Kommunikationsnetz ein Telefonnetz verwendet. Damit besteht die Möglichkeit, ohne die Veränderung oder Erweiterung der Telekommunikations-Infrastruktur, das Telefonnetz in seiner dem Stand der Technik entsprechenden Ausbildung für das erfindungsgemäße Verfahren zu benutzen.

Es ist vorgesehen, daß die Signalisierung der Nachricht und das Abrufen der Nachricht über zwei verschiedene Endgeräte durchgeführt wird. Das heißt, daß die Signalisierung einer eingegangenen Nachricht im allgemeinen über ein Endgerät erfolgt, das ständig in Betrieb ist -zum Beispiel das Telefonund das Abrufen des eigentlichen Inhalts der Nachricht über ein anderes Endgerät wie zum Beispiel einem PC erfolgt.

Nach einer Weiterbildung des erfindungsgemäßen Verfahrens erfolgt die Signalisierung -also die Informationsweitergabe- mittels eines akustischen Zeichens, was besonders bei analogen Telefonteilnehmern vorteilhaft ist. Damit ist zum Ausdruck gebracht, daß ein analoger Endgeräteteilnehmer, insbesondere ein Empfangsteilnehmer mit einem herkömmlichen Telefonapparat nach Abheben des Telefonhörers ein akustisches Zeichen hört, das ihm mitteilt, ob für ihn eine Nachricht vorliegt. Es ist ebenso möglich, daß das akustische Signal nicht erst nach dem Abheben des Telefonhörers hörbar ist, sondern der Telefonapparat so angesteuert wird, daß das akustische Zeichen durch ein allgemein als Klingeln bezeichneten Ton beziehungsweise Geräusch die Information über das Vorliegen einer Nachricht erfolgt.

In einer bevorzugten Ausgestaltung des erfindungsgemäßen Verfahrens wird das vorhergehend erläuterte akustische Zeichen durch einen für die Information charakteristischen Freizeichenton oder durch eine Freizeichenton-Sequenz gebildet. Es muß für den Empfangsteilnehmer sichergestellt sein, daß das akustische Zeichen unverwechselbar in Zusammenhang mit der Information einer neuen Nachricht steht, so daß entweder eine bisher noch nicht verwendete Tonfrequenz oder aber eine bisher noch nicht verwendete Ton/Pausen-Folge oder Tonfolgen-Frequenz verwendet wird. Weiterhin muß sichergestellt sein, daß der Empfangsteilnehmer das akustische Zeichen weiterhin als Freizeichen erkennt, so daß er abgehende Verbindungen in gewohnter Weise tätigen kann.

In einer weiteren Weiterbildung des erfindungsgemäßen Verfahrens erfolgt die Signalisierung mittels eines dafür spezifizierten Datentelegramms, vorausgesetzt der Empfangsteilnehmer ist in diesem Fall ein digitaler Endgeräteteilnehmer, insbesondere ein ISDN-Endgeräteteilnehmer. Unter Verwendung des Datentelegramms kann damit das digitale Endgerät so angesteuert werden, daß dieses dem Empfangsteilnehmer signalisiert, daß eine neue Nachricht für ihn vorliegt. Falls das digitale Endgerät die Information speichern kann, reicht es in diesem Fall aus, wenn das Datentelegramm nur einmal zum Empfangsteilnehmer gesendet wird.

In einer weiteren bevorzugten Ausgestaltung des erfindungsgemäßen Verfahrens führt das spezifizierte Datentelegramm zu einer optischen und/oder akustischen Mitteilung an dem digitalen Endgerät. Damit ist es möglich, daß das digitale Endgerät entweder, falls dieses ein Display zur Anzeige aufweist, beispielsweise zur einer Textausgabe im Display, zu einem Aufleuchten eines bestimmten Symbols oder zu einem Signalton zur Mitteilung einer vorliegenden Nachricht führt. Es ist ebenso möglich, daß beispielsweise ein digitales Fax-Gerät mittels des spezifizierten Datentelegramms eine bedruckte Seite ausgibt, aus der die Information hervorgeht, daß eine Nachricht für den Empfangsteilnehmer vorliegt.

In einer bevorzugten Ausprägung des erfindungsgemäßen Verfahrens beinhaltet die Adresse der Nachricht die Telefonanschlußnummer des Empfangsteilnehmers. Auf diese Weise läßt sich der Verwaltungsaufwand im Speichermedium verringern, da keine Referenztabelle geführt werden muß, in der die Telefonanschlußnummer angegeben ist. Handelt es sich bei der Nachricht um eine E-Mail, könnte die E-Mail-Adresse damit lauten: Vorname_Name@(Telefonnummer).telekom.de. Durch diese Einbindung kann der E-Mail-Server diesen Anschluß dem Kommunikationsnetz mitteilen, so daß das Kommunikationsnetz die Information einfach an den Empfangsteilnehmer weiterreichen kann.

Nach Anspruch 11 wird zum Senden und zum Empfangen der E-Mails das Internet verwendet. Damit ist das vorstehend erwähnte E-Mail-System ein Bestandteil des Internets und ermöglicht den Austausch von Nachrichten unter Verwendung von E-Mails.

Die Aufgabe wird weiterhin durch eine Vorrichtung nach Anspruch 12 gelöst, der besagt, daß eine Vorrichtung zur Verwaltung von Nachrichten verwendet wird, die mittels einer Signalisierungseinrichtung eine Signalisierung einer Nachricht an einen Empfangsteilnehmer durchführt. Die Signalisierungseinrichtung ist derart ausgebildet, daß sie eine Information zur Signalisierung einer Nachricht generiert und diese Information an ein Telefon oder Faxgerät des Empfangsteilnehmers übermittelt. Falls die Empfangs-Adresse (E-Mail-Adresse) der Nachricht eine Anschlußnummer des Telefons oder Faxgeräts beinhaltet, so kann die Signalisierungseinrichtung direkt die Signalisierung an das Telefon oder Faxgerät durchführen; ist dies nicht der Fall, so muß die erfindungsgemäße Vorrichtung eine zweite Speichereinheit aufweisen, die mit der Signalisierungseinrichtung verbunden ist um damit, anhand der Empfangs-Adresse, die in der zweiten Speichereinheit abgelegte Anschlußnummer des Empfangsteilnehmers zu ermitteln.

Die Erfindung wird nun anhand eines Ausführungsbeispiels mit Bezug auf die Zeichnungen näher beschrieben. Dabei zeigen:
- Figur 1: eine symbolische Darstellung eines Mail-Systems, und
- Figur 2: ein schematisches Blockdiagramm eines E-Mail-Servers.

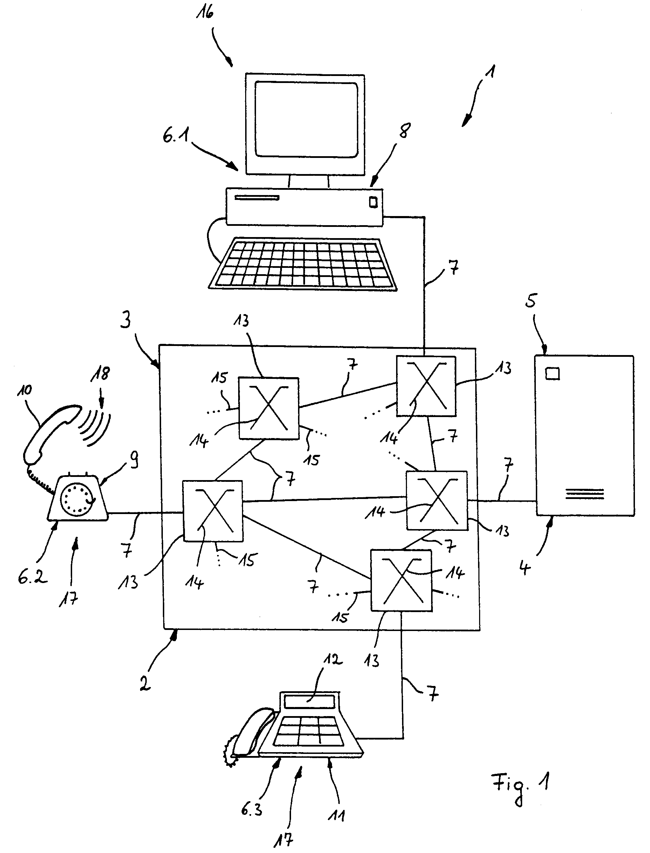

Die Figur 1 zeigt eine schematische Anordnung eines Mail-Systems 1, das unter anderem zum Austausch von Nachrichten verwendet wird. Das in Figur 1 vereinfachte Mail-System weist ein Kommunikationsnetz 3 in der Art eines Telefonnetzes 2, ein Speichermedium 4 als E-Mail-Server 5 dargestellt und drei Endgeräte 6.1 bis 6.3 sowie Kommunikationsleitungen 7 auf.

Das Endgerät 6.1 stellt einen PC 8 dar, der entweder analog über ein -der Übersichtlichkeit halber- nicht dargestelltes Modem oder über eine digitale Schnittstelle mittels einer Kommunikationsleitung 7 an das Telefonnetz 2 angeschlossen ist. Das Endgerät 6.2 ist ein herkömmlicher analoger Telefonapparat 9 mit einem eine Hör- und Sprechmuschel aufweisenden Hörer 10 und das dritte Endgerät 6.3 ist ein digitales ISDN-Telefon 11, welches unter anderem ein Display 12 aufweist. Auch die beiden Endgeräte 6.2 und 6.3 sowie der E-Mail-Server 5 sind über Kommunikationsleitungen 7 an das Telefonnetz 2 angeschlossen. Das Telefonnetz 2 weist eine Vielzahl von Vermittlungsstellen 13 beziehungsweise Koppelnetze 14 auf, die untereinander über die Kommunikationsleitungen 7 vermascht sind. Weitere Kommunikationsleitungen 15 zu anderen Vermittlungsstellen 13 beziehungsweise zu anderen Kommunikationsnetzen 3 sind gepunktet in Figur 1 angedeutet.

Ein beispielhaftes Szenario zum erfindungsgemäßen Verfahren läuft wie folgt ab: Ein Sendeteilnehmer 16 erstellt auf dem PC 8 eine Nachricht und möchte diese an zwei verschiedene E-Mail-Adressen senden. Dazu wird die Nachricht über die Kommunikationsleitungen 7 und das Telefonnetz 2, wobei für das erfindungsgemäße Verfahren der Signalweg durch die Vermittlungsstellen 13 unerheblich ist, an den E-Mail-Server 5, der diese Nachricht speichert, übertragen. Die erfindungsgemäße Vorrichtung in Form des E-Mail-Servers 5 erzeugt daraufhin eine Information über das Vorhandensein einer Nachricht und sendet diese Information an das Telefonnetz 2 beziehungsweise an eine Vermittlungsstelle 13. Das Telefonnetz 2 beziehungsweise die Vermittlungsstelle 13 trägt nun Sorge, daß die Information an die beiden Endgeräte 6.2 und 6.3 (Empfangsteilnehmer 17) übertragen wird, die den E-Mail-Adressen zugeordnet sind.

Dazu wird für das Endgerät 6.2, also dem analogen Telefonapparat 9, von der Vermittlungsstelle 13 solange ein charakteristischer Freizeichenton 18, falls der Empfangsteilnehmer 17 den Hörer 10 abhebt, aufgeschaltet, bis dieser die für ihn bestimmte Nachricht über ein weiteres in Figur 1 nicht dargestelltes Endgerät, vorzugsweise ein PC, abruft. Es ist jedoch auch möglich, daß der charakteristische Freizeichenton 18 nur einmal beim Abheben des Hörers 10 für eine gewisse Zeit angelegt wird und bei nachfolgendem Abheben des Hörers 10 der charakteristische Freizeichenton 18 nicht mehr ertönt.

An den anderen Empfangsteilnehmer 17, also an das ISDM-Telefon 11, wird ein spezielles Datentelegramm von der Vermittlungsstelle 13 gesendet, so daß das ISDN-Telefon 11 über sein Display 12 dem Empfangsteilnehmer 17 mit beispielsweise einer Textausgabe informiert, daß für ihn eine Nachricht vorhanden ist. Holt der Empfangsteilnehmer 17 nach Anmelden am E-Mail-Server 5 seine für ihn bestimmte Nachricht ab und stehen keine weiteren Nachrichten für ihn an, so muß auch in diesem Fall ein weiteres Datentelegramm dem ISDM-Telefon 11 mitteilen, daß die Textausgabe zur Information einer gespeicherten Nachricht gelöscht werden kann.

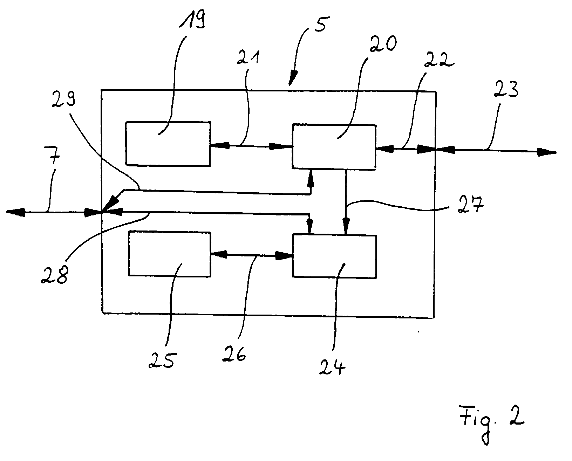

In Figur 2 ist ein E-Mail-Server 5 dargestellt, der zur Zwischenspeicherung von E-Mails dient und weiterhin eine Signalisierung zwischengespeicherter E-Mails ermöglicht. Der E-Mail-Server 5 weist einen ersten Speicher 19, der zur Zwischenspeicherung von eingegangenen E-Mails benötigt wird und eine E-Mail-Empfangs-/Sendeeinheit 20 auf. Über eine bidirektionale Verbindungsleitung 21 und eine weitere bidirektionale Verbindungsleitung 22 ist der erste Speicher 19 mit der E-Mail-Empfangs-/Sendeinheit 20 an das Internet 23 angeschlossen, so daß E-Mails über die bidirektionalen Verbindungsleitungen 21, 22 in den ersten Speicher 19 zur Zwischenspeicherung übertragen werden können.

Weiterhin weist der E-Mail-Server 5 eine Signalisierungseinheit 24 und einen zweiten Speicher 25 auf, die über eine weitere bidirektionale Verbindungsleitung 26 miteinander verbunden sind. Die Signalisierungseinheit 24 wird nach Zwischenspeicherung einer von dem Internet 23 übertragenen E-Mail über eine Steuerleitung 27 von der E-Mail-Empfangs-/Sendeeinheit so aktiviert, daß eine Signalisierung über eine Signalisierungsleitung 28 zu einer Kommunikationsleitung 7 erfolgt. Die Kommunikationsleitung 7 führt -wie in Figur 1 ersichtlich- weiter über das Telefonnetz 2 zu den Endgeräten (in Figur 2 der Übersichtlichkeit halber nicht dargestellt).

In dem zweiten Speicher 25 ist beispielsweise in Form einer Tabelle die Zuordnung zwischen der E-Mail-Adresse und der Telefonanschlußnummer eines Empfangsteilnehmers 17 (in Figur 2 nicht dargestellt) abgelegt, so daß anhand der E-Mail-Adresse der Empfangsteilnehmer 17 identifiziert und über das Vorhandensein einer E-Mail informiert werden kann. Es ist in einer Weiterbildung der Erfindung möglich, daß die Zuordnung zwischen E-Mail-Adresse und Telefonanschlußnummer durch einen Endkunden selbständig durchgeführt beziehungsweise programmiert werden kann, so daß zum Beispiel eine Signalisierung auf ein anderes Endgerät umgeleitet werden kann. Ist in der E-Mail-Adresse die Telefonanschlußnummer enthalten, so kann der zweite Speicher 25 beziehungsweise die Zuordnung zwischen E-Mail-Adresse und Telefonanschlußnummer entfallen.

Über eine Nachrichtenleitung 29 besteht für den Empfangsteilnehmer 17 die Möglichkeit, den eigentlichen Inhalt seiner E-Mail über die E-Mail-Empfangs-/Sendeeinheit 20 und die Kommunikationsleitung 7 aus dem ersten Speicher 19 auszulesen. Das Auslesen des E-Mail-Inhalts ist jedoch auch über die bidirektionale Verbindungsleitung 22 und damit über das Internet 23 möglich.

## Patentansprüche

1. Verfahren zur Signalisierung des Erhaltens einer, für einen Empfangsteilnehmer bestimmten, zwischengespeicherten Nachricht, wobei von einem Sendeteilnehmer über ein Kommunikationsnetz die Nachricht zu einem Speichermedium zur Zwischenspeicherung übermittelt wird und der Empfangsteilnehmer das Speichermedium zum Erhalt der Nachricht über das Kommunikationsnetz ausliest, **dadurch gekennzeichnet**, daß unabhängig von der Möglichkeit der Abfrage der Nachricht über das Kommunikationsnetz (3) der Empfangsteilnehmer (17) über das Kommunikationsnetz (3) eine Information darüber zur Verfügung gestellt bekommt, ob eine Nachricht für ihn hinterlegt ist oder nicht.

2. Verfahren nach Anspruch 1, **dadurch gekennzeichnet**, daß als Kommunikationsnetz (3) ein Telefonnetz (2) verwendet wird.

3. Verfahren nach einem der vorhergehenden Ansprüche, **dadurch gekennzeichnet**, daß die Signalisierung der Nachricht und das Abrufen der Nachricht über zwei verschiedene Endgeräte durchgeführt wird.

4. Verfahren nach einem der vorhergehenden Ansprüche, **dadurch gekennzeichnet**, daß falls der Empfangsteilnehmer (17) ein analoger Telefonteilnehmer (9) ist, die Signalisierung beziehungsweise die Information mittels eines akustischen Zeichens erfolgt.

5. Verfahren nach Anspruch 4, **dadurch gekennzeichnet**, daß das akustische Zeichen durch einen für die Information charakteristischen Freizeichenton (18) oder Freizeichenton-Sequenz gebildet wird.

6. Verfahren nach einem der Ansprüche 1 oder 2, **da**-**durch gekennzeichnet**, daß falls der Empfangsteilnehmer (17) ein digitaler Endgeräteteilnehmer, insbesondere ein ISDN-Endgeräteteilnehmer (11) ist, die Signalisierung beziehungsweise die Information mittels eines dafür spezifizierten Datentelegramms erfolgt.

7. Verfahren nach Anspruch 6, **dadurch gekennzeichnet**, daß das spezifizierte Datentelegramm zu einer optischen und/oder akustischen Mitteilung an dem digitalen Endgeräteteilnehmer führt.

8. Verfahren nach einem der vorhergehenden Ansprüche, **dadurch gekennzeichnet**, daß als Speichermedium (4) ein E-Mail-Server (5) verwendet wird.

9. Verfahren nach einem der vorhergehenden Ansprüche, **dadurch gekennzeichnet**, daß als Nachricht eine E-Mail verwendet wird.

10. Verfahren nach einem der vorhergehenden Ansprüche, **dadurch gekennzeichnet**, daß die E-Mail-Adresse die Telefonanschlußnummer des Empfangsteilnehmers (17) beinhaltet.

11. Verfahren nach einem der vorhergehenden Ansprüche, **dadurch gekennzeichnet**, daß zum Senden und zum Empfangen der E-Mail das Internet verwendet wird.

12. Vorrichtung zur Verwaltung von über ein Kommunikationsnetz übertragenen elektronischen Nachrichten, vorzugsweise E-Mails, mit einer Sende-/und Empfangseinheit, die eintreffende eine EmpfangsAdresse tragende Nachrichten in einer ersten Speichereinheit zwischenspeichert, derart, daß sie von dem adressierten Teilnehmer abrufbar sind, **dadurch gekennzeichnet**, daß eine Signalisierungseinheit (24) vorgesehen ist, der die Empfangs-Adresse der eintreffenden Nachricht zugeführt ist und die eine Information zur Signalisierung einer Nachricht an einen Empfangsteilnehmer übermittelt, wobei der Empfangsteilnehmer abhängig von der Empfangs-Adresse ausgewählt wird.

13. Vorrichtung nach Anspruch 12, **dadurch gekennzeichnet**, daß die Vorrichtung ein E-Mail-Server (5) ist.

14. Vorrichtung nach Anspruch 12 oder 13, **dadurch gekennzeichnet**, daß es sich bei dem Empfangsteilnehmer um ein Telefon oder ein Faxgerät handelt.

15. Vorrichtung nach einem der Ansprüche 12 bis 14, **dadurch gekennzeichnet**, daß eine zweite Speichereinheit (25) vorgesehen ist, die mit der Signalisierungseinrichtung verbunden ist und in der zu jeder Empfangs-Adresse eine Anschlußnummer eines Empfangsteilnehmers abgelegt ist.
